# EUROPEAN PATENT SPECIFICATION

(11) **EP 2 404 732 B1**
(45) Date of publication and mention of the grant of the patent: **17.05.2017**
(21) Application number: 11175653.2
(22) Date of filing: 16.02.2007
(51) Int. Cl.: B29C 43/34, B29C 31/04, B29C 43/08

(54) **Method and apparatus for feeding molten resin mass in a press mould**
Verfahren und Vorrichtung zum Zuführen einer geschmolzenen Kunststoffmasse in einer Pressform
Procédé et appareil pour introduire une masse de résine fondue dans un moule de pressage

(30) Priority: 17.02.2006 JP 2006040250; 31.03.2006 JP 2006097509; 31.03.2006 JP 2006097510; 28.04.2006 JP 2006125437
(43) Date of publication of application: 11.01.2012
(62) Divisional of application: 07737326.4
(73) Proprietor: Toyo Seikan Group Holdings, Ltd., Shinagawa-ku, Tokyo 141-8640 (JP)
(72) Inventor: Asano, Yutaka, Kanagawa, 240-0062 (JP); Hirota, Norihisa, Kanagawa, 240-0062 (JP); Nagao, Jotaro, Kanagawa, 240-0062 (JP); Watanabe, Kazunobu, Kanagawa, 240-0062 (JP)
(74) Representative: Manley, Nicholas Michael

(56) References cited:
- WO-A1-2005/102646
- US-A- 4 336 011
- US-A- 5 811 044
- US-B1- 6 241 935
- DATABASE WPI Week 198743 Thomson Scientific, London, GB; AN 1987-302686 XP002574185, -& JP 62 212100 A (CANON KK) 18 September 1987 (1987-09-18)

## Description

### Technical Field

The present invention relates to a method and apparatus for feeding a molten resin mass of a synthetic high molecular material. More specifically, the invention relates to a method and apparatus for feeding a molten resin mass for causing a predetermined amount of the molten resin extruded from a die head of an extruder to fall down into a female mold for compression molding.

### Background of the Invention

An injection-molding method and a compression-molding method have heretofore been widely known for producing such containers as bottles, caps and cups by using thermoplastic resins. In the compression-molding method, the molten resin extruded from a die head of an extruder is partly cut into a molten resin mass of a predetermined amount and is caused to fall down into a female mold for compression molding. Next, a male mold is pushed onto the molten resin mass in the female mold from the upper side thereof to effect the compression molding to obtain a desired formed particle. To produce a bottle, first, a preform is produced by the compression molding and is subjected to the blow forming (see JP-A-2000-280248).

The present applicant has previously proposed a technology according to which a predetermined amount of a molten resin extruded from a die head of an extruder is cut into a molten resin mass, and a cylindrical transfer guide is used as means for transferring the molten resin mass into the female mold for compression molding. This technology enables the molten resin mass to fall down into the cavity of the female mold for compression molding without being even locally damaged (see JP-A-2005-343110).

WO 2005/102646 discloses a machine comprising a plurality of handling means, each having a contact surface with the polymeric body, adapted for holding by contact and pulling in movement the polymeric body itself, moving means adapted for moving said handling means along at least one portion of path comprised between a dispensing point of the polymeric body and a die cavity, means adapted for forming a fluid interspace along said contact surface such as to totally or partly reduce the adhesion effect between the polymeric body and the contact surface itself.

### Disclosure of the Invention

According to the conventional apparatus for feeding the molten resin mass, however, the molten resin mass partly adheres onto the inner peripheral surface of the cylindrical transfer guide causing dispersion in the timing of falling into the female mold for compression molding, and improvement is urged from the standpoint of managing the production.

It is therefore an object of the present invention to provide a method of feeding a molten resin mass, which is capable of cutting a predetermined amount of a molten resin extruded from a die head of an extruder into a molten resin mass and of reliably causing the molten resin mass to fall down into a female mold for compression molding from a cylindrical transfer guide that transfers the molten resin mass up to the female mold for compression molding without delay in the timing, and an apparatus therefor.

The objective of the invention is achieved by the method according to attached claim 1 or the apparatus according to attached claim 3. A preferred embodiment of the method is defined in subclaim 2.

In accordance with the invention, there is provided a method of feeding a molten resin mass into a female mold for compression molding, wherein the molten resin mass contained in a container chamber in a cylindrical transfer guide is caused to fall down into a cavity of the female mold at the time of overlapping the cylindrical transfer guide on the female mold of a compression molding apparatus which is transferred on a rotary table in a circumferential direction; characterized in that the pressure in the cavity has been reduced by evacuating through evacuation passages perforated in the bottom portion of the cavity of the female mold and the pressure P2 in the cavity of the female mold of the compression molding apparatus is thus set to be lower than the pressure P1 in the container chamber of the transfer guide thereby the molten resin mass is caused to fall down into the cavity by the differential pressure between the container chamber and the cavity.

The pressure may be elevated in a container chamber of the transfer guide.

Further, an apparatus for feeding a molten resin mass into a female mold of a compression molding apparatus according to the present invention comprises a female mold which is provided in the compression-molding apparatus for the molten resin mass compression molding apparatus for the molten resin mass compression molding and is transferred on a rotary table of the compression molding apparatus in the circumferential direction, and the cylindrical transfer guide comprising a container chamber for containing the molten resin mass extruded from a die head of an extruder is capable of overlapping on the female mold; and characterized in that evacuation passages perforated in the bottom portion of a cavity of the female mold and a source of evacuation connected to the evacuation passages are provided therewith, and the container chamber is communicated with the cavity and the pressure in the cavity is reduced by the source of evacuation, thereby the pressure in the cavity becomes lower than that in the container chamber.

Also disclosed, but not forming part of the claimed invention, is a method of feeding a molten resin mass by overlapping a cylindrical transfer guide on a female mold for compression molding, and causing a molten resin mass in the transfer guide to fall down into the female mold, wherein the molten resin mass is caused to fall down by blowing a high-pressure air into a container chamber of the transfer guide from a nozzle head attached to an upper part of the transfer guide.

The high-pressure gas is desirably a compressed inert gas such as a nitrogen gas. The compressed air, too, can be used.

Also disclosed, but not forming part of the claimed invention is, an apparatus for feeding a molten resin mass, comprising a female mold for compression-molding a molten resin mass, a cylindrical transfer guide which can be overlapped on the female mold and is capable of containing the molten resin mass extruded from a die head of an extruder, and a nozzle head attached to the vertex of the transfer guide and having a nozzle formed therein, wherein the nozzle head has an injection port opened in an upper region of the container chamber of the transfer guide.

The injection port in the nozzle head may comprise one or two or more circular holes may comprise an annular groove, or may assume any other shape.
The nozzle head in the above device for feeding the molten resin mass includes a fixed housing attached to an upper part of the transfer guide and a rotary head supported in the fixed housing so as to rotate and having a nozzle forming injection ports opened in the container chamber of the transfer guide. Here, the axis of the nozzle intersects the axis of rotation of the rotary head at a predetermined angle.

Also disclosed, but not forming part of the claimed invention, is an apparatus for feeding a molten resin mass comprising:
a turntable that rotates;
a female mold for molding that reciprocates between a position where the molten resin extruded from a die head of an extruder is cut and a position of compression-molding by a male mold for forming along a radial line of the turntable;
a transfer guide arranged just over the female mold and is capable of cutting a portion of the molten resin; and
vibration-generating means for imparting vibration to the transfer guide.

The female mold for forming is placed on a slide plate that slides on a guide rail laid along the radial line of the turntable.

The molten resin mass transfer guide comprises a fixed blade of nearly a semicircular shape and a moving blade that can be opened and closed being coupled to the fixed blade by a hinge.

The molten resin transfer guide is placed just over the female mold for molding but just under the die head.

A guide throat is arranged between the transfer guide and the female mold for molding.

According to a non-claimed method and apparatus for feeding the molten resin mass, the molten resin mass does not adhere to the inner peripheral surface of the container chamber of the transfer guide, the molten resin mass can be fallen down into the female mold for compression forming in a short period of time and smoothly, and the production can be easily managed maintaining stability without dispersion in the falling time.

In a non-claimed embodiment of controlling the temperature of the high-pressure gas to assume a predetermined temperature, it is allowed to relax the distortion at the time of cutting and molding and to improve the appearance of the molten resin mass. Further, when the high-pressure gas is cooled, stickiness of the molten resin mass can be lowered and handling property can be improved at the time of conveyance.

### Brief Description of the Drawings

Fig. 1 is a plan view illustrating a compression-molding machine to which the present invention is applied;
Fig. 2 is a plan view illustrating a transfer guide in an open state;
Fig. 3 is a plan view illustrating the transfer guide in a closed state;
Fig. 4 is a view illustrating a state where the molten resin mass is cut by the transfer guide;
Fig. 5 is a view illustrating the transfer guide after the cutting;
Fig. 6 is a non-claimed embodiment illustrating a side view of the transfer guide;
Fig. 7 is a vertical sectional view illustrating air reservoir-type vibration-generating means in a state where the pressure is elevating;
Fig. 8 is a vertical sectional view illustrating air reservoir-type vibration-generating means in a state where the pressure is released;
Fig. 9 is a side sectional view illustrating a non-claimed embodiment which uses a weight;
Fig. 10 is a vertical sectional view illustrating an example of using weight-type vibration-generating means;
Fig. 11 is a side sectional view illustrating an example of using transverse vibration-type vibration-generating means;
Fig. 12 is a side sectional view illustrating a state where a molten resin mass is falling down just after it is cut;
Fig. 13 is a transverse sectional view illustrating an example of using vibration-generating means based on a ring;
Fig. 14 is a vertical sectional view illustrating vibration-generating means based on an electromagnetic solenoid;
Fig. 15 is a side view illustrating a state where the electromagnetic solenoid is in the attracted state;
Fig. 16 is a side view illustrating an example of using piezoelectric elements;
Fig. 17 is a plan view illustrating the transfer guide after the cutting has been finished;
Fig. 18 is a vertical sectional view illustrating an embodiment of a method of compression molding according to the invention;
Fig. 19 is a vertical sectional view of the method of compression molding according to another embodiment of the invention;
Fig. 20 is a vertical sectional view illustrating an embodiment of reducing the pressure in the cavity of the female mold in the compression-molding metal mold;
Fig. 21 is a vertical sectional view illustrating an example of applying the invention to a metal mold for forming a wide-mouth preform;
Fig. 22 is a vertical sectional view illustrating an embodiment of reducing the pressure in the female mold in the compression-molding metal mold;
Fig. 23 is a vertical sectional view illustrating the transfer guide and a gas nozzle head;
Fig. 24 is a vertical sectional view illustrating a non-claimed embodiment of the gas nozzle head;
Fig. 25 is a front view of the gas nozzle head;
Fig. 26 is a front view of another gas nozzle head;
Fig. 27 is a front view another gas nozzle head;
Fig. 28 is a front view of still another gas nozzle head;
Fig. 29 is a vertical sectional view illustrating a non-claimed embodiment of the gas nozzle head;
Fig. 30 is a vertical sectional view of the rotary head;
Fig. 31 is a front view of the rotary head;
Fig. 32 is a vertical sectional view of a rotary connector;
Fig. 33 is a plan view illustrating a compression-forming machine and an apparatus for feeding a molten resin mass;
Fig. 34 is a side view of the above molding machine;
Fig. 35 is a plan view of a cutter in an opened state; and
Fig. 36 is a plan view of the cutter in the closed state.

### Blest Mode for Carrying Out the Invention

An embodiment of the apparatus for feeding a molten resin mass according to the invention will now be described with reference to the drawings.

Fig, 1 is a plan view of a single-layer rotary compression-molding apparatus, wherein reference numeral 1 denotes an extruder. The extruder 1 incorporates a screw, and extrudes a molten thermoplastic resin such as propylene or polyethylene terephthalate downward from a die head 2. In this embodiment, the invention is applied to the single-layer compression-molding apparatus. Not being limited thereto only, however, the invention can be further applied to a multi-layer molten resin compression-molding apparatus, too.

Reference numeral 3 denotes lower female molds in the rotary compression-molding metal mold. Many female molds 3, 3, ---, 3 for compression molding are arranged along the circumference on a turntable 4 maintaining an equal distance.

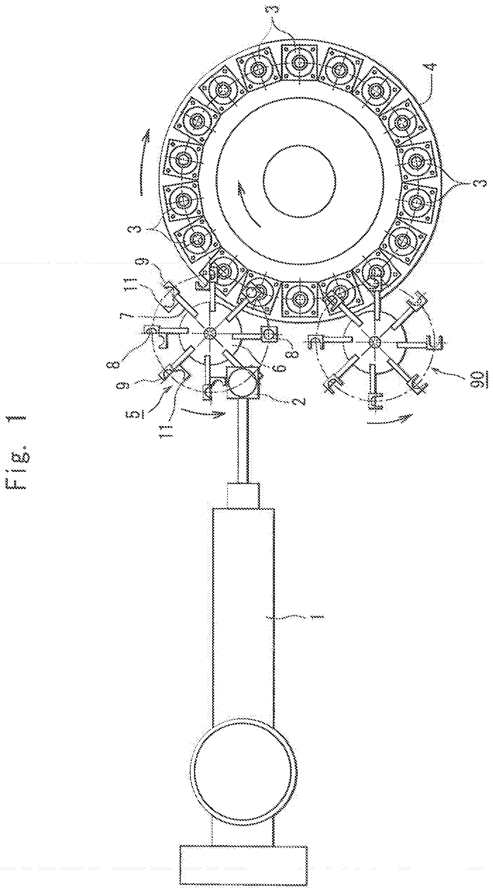

Between the extruder 1 and the turntable 4, there is provided a rotary cutter device 5 for cutting a predetermined amount of the molten resin extruded from the die head 2 of the extruder 1 into a molten resin mass, and for falling the molten resin mass down into the female mold 3 for compression molding. The cutter device 5 has a disk-like hub 6, and arms 7 are radially extending from the hub 6 maintaining an equal distance in the circumferential direction. A transfer guide 8 according to the invention is attached to an end of each arm 7. In Fig. 1, reference numeral 90 denotes a take-out device for discharging the preforms that are compression-formed to a next step.

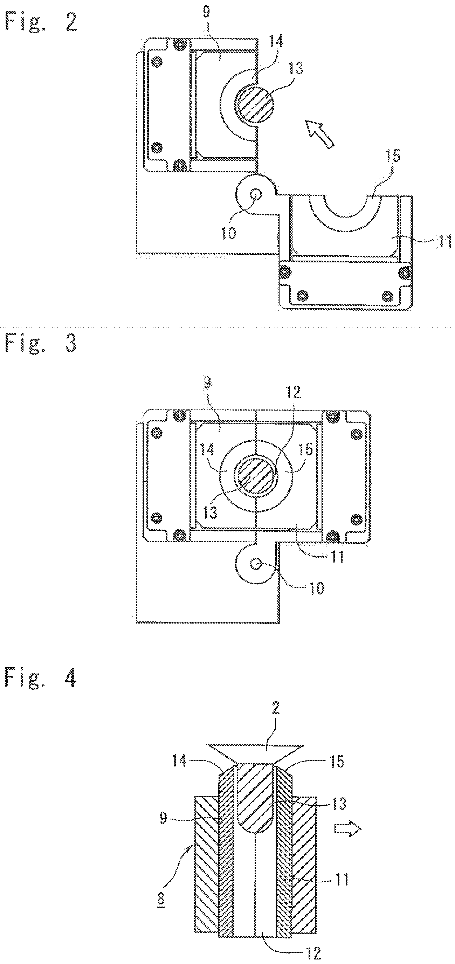

Referring to Figs. 2 and 3, the transfer guide 8 is constituted by a fixed transfer guide 9 and a moving holder 11 pivotally attached to the fixed transfer guide 9 so as to be opened and closed about a hinge shaft 10. When the moving holder 11 is closed to the fixed transfer guide 9 as is obvious from Fig, 3, a cylindrical container chamber 12 is formed between the two, and a molten resin mass 13 that is cut is contained in the container chamber 12. Further, a fixed blade 14 and a moving blade 15 are integrally formed at the upper ends of the fixed transfer guide 9 and of the moving holder 11 to cut the molten resin into a predetermined amount.

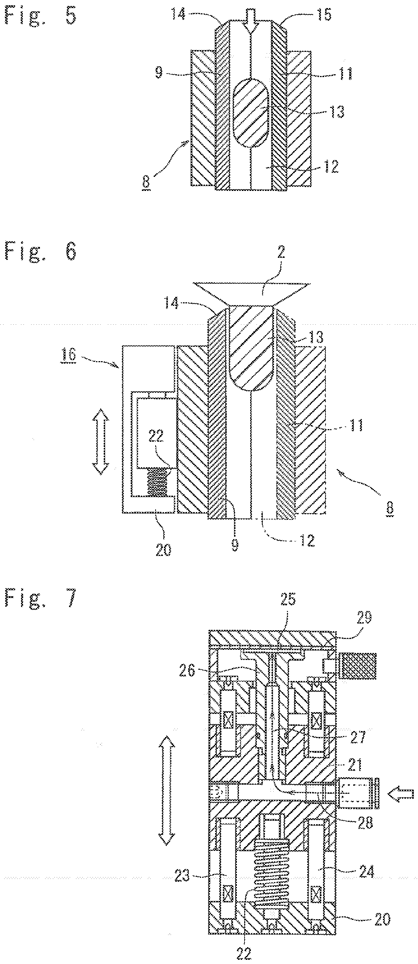

Fig. 4 is a view illustrating a state where the molten resin extruded from the die head 2 is just going to be cut by the fixed blade 14 at the upper edge of the fixed transfer guide 9 and by the moving blade 15 at the upper edge of the moving holder 11. As is obvious in Fig. 5, the molten resin mass 13 after cut falls down through the container chamber 12 of the transfer guide 8 into the female mold 3 for compression molding arranged just under the transfer guide 8.

Fig. 6 illustrates a non-claimed embodiment of the apparatus for feeding a molten resin mass, wherein vibration-generating means generally designated at 16 is mounted on the fixed transfer guide 9 that constitutes the transfer guide to impart fine vibration to the transfer guide 8.

The vibration-generating means 16 can be realized in a variety of non-claimed embodiments which will now be described.

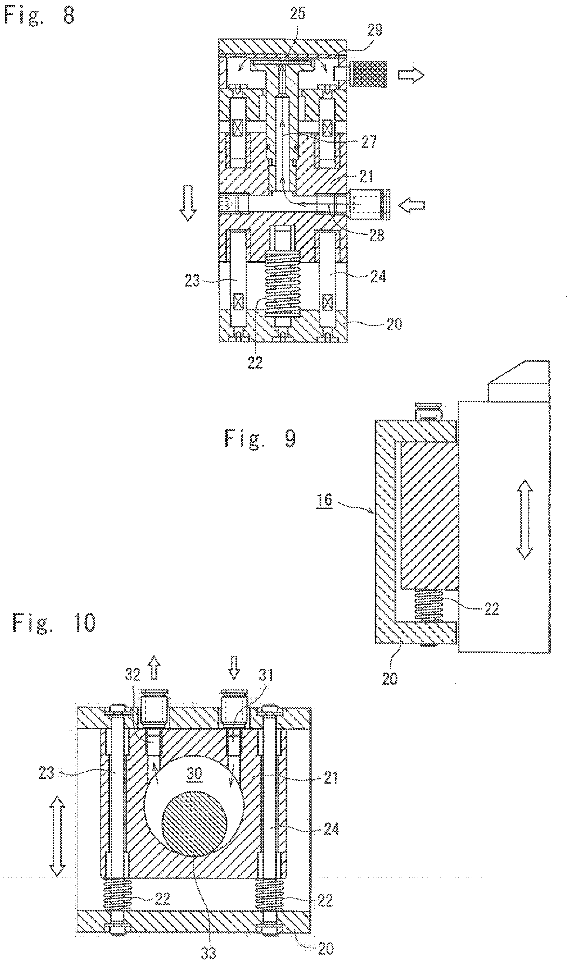

Figs. 7 and 8 illustrate an example of the air reservoir-type vibration-generating means. In Fig, 7, reference numeral 20 denotes a fixed frame, and a moving member 21 is elastically suspended on the fixed frame 20 via a push spring 22. The moving member 21 moves up and down being guided by a pair of guide shafts 23 and 24. The moving member 21 incorporates a valve member 26 that forms a valve chamber 25, and a valve passage 27 of the valve member 26 is communicated with an air feed port 28. The upper end surface of the valve member 26 comes in contract with a valve seat 29 provided on the side of the fixed frame 20 to thereby form the valve chamber 25 in cooperation therewith. In this non-claimed embodiment, the compressed air is fed into the valve chamber 25 from the air feed port 28 through the valve passage 27. If the pressure in the valve chamber 25 becomes greater than a predetermined value, the push spring 22 is compressed and the valve member 26 slightly descends as shown in Fig. 8. Therefore, the air in the valve chamber 25 is released, whereby the pressure decreases and the valve member returns due to the spring force of the push spring 22. Repetition of this operation gives vibration to the transfer guide 8.

Figs. 9 and 10 illustrate another non-claimed embodiment of the vibration-generating means using a weight.

In this non-claimed embodiment, the moving member 21 moves up and down relative to the fixed frame 20 along the guide shafts 23 and 24, and an air chamber 30 is formed in the moving member 21, the air chamber 30 being communicated with an air feed port 31 and an air release port 32. Further, a weight 33 which is a vibrator is incorporated in the air chamber 30. The weight 33 is a cylindrical member but may assume any other suitable form such as a spherical body or a ring.

In this non-claimed embodiment, the compressed air is introduced into the air chamber 30 from the air feed port 31 to act upon the weight 33 so that the weight 33 rotates in a manner that the center of gravity and the center of rotation of the weight varies, and is re leased from the air release port 32. During this moment, the weight 33 gives impact to the movable transfer guide 21 to vibrate it. As a result, vibration is imparted to the transfer guide 8.

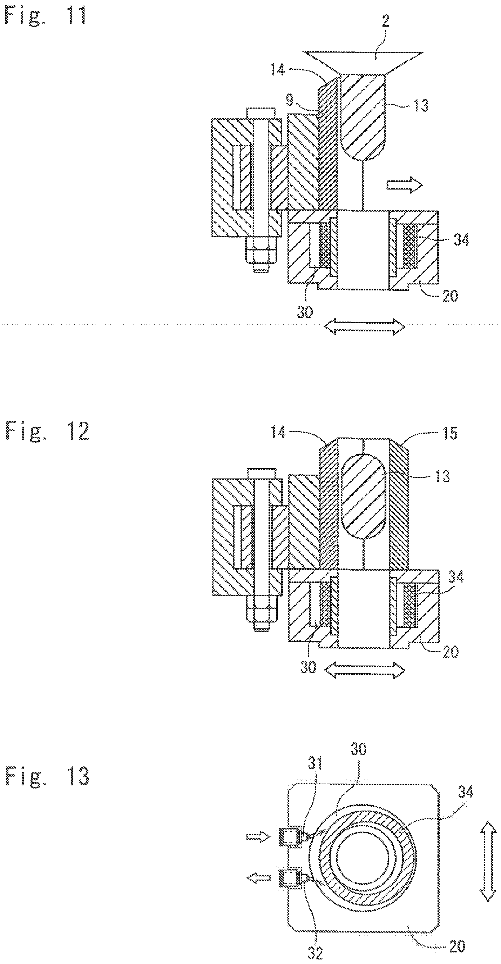

In a non-claimed embodiment shown in Figs. 11, 12 and 13, a ring-like weight is used instead of the short cylindrical weight 33. That is, the air chamber 30 is formed on the inside of the fixed frame 20, and a ring 34 is incorporated in the air chamber 30,

In this non-claimed embodiment, the compressed air is fed from the air feed port 31 and is released from the air release port 32. During this the compressed air acts on the ring 34 to rotate the ring 34. The ring 34 that rotates produces a vibratory force to impart vibration to the transfer guide 8.

In the above non-claimed embodiment, the weight 33 rotates in the air chamber 30 due to the action of the air pressure of the compressed air. The weight 33, however, can be directly driven and rotated by a drive motor.

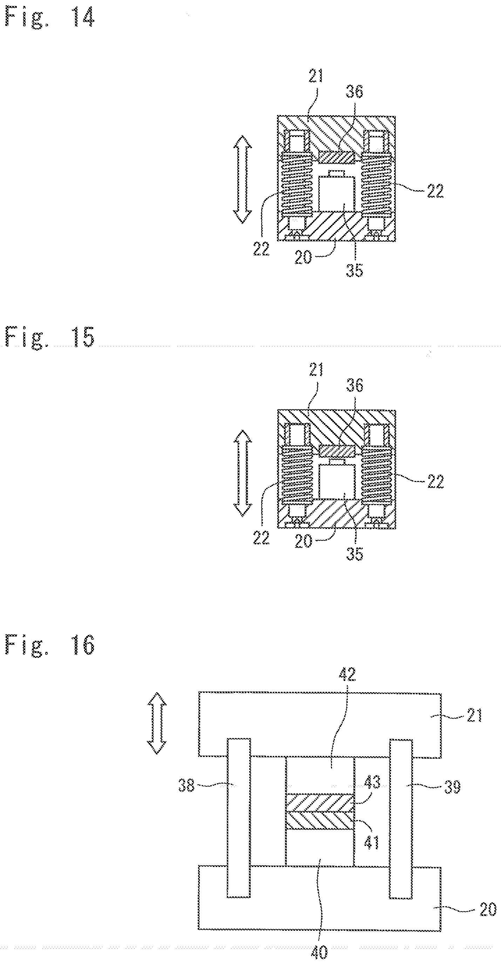

Figs. 14 and 15 illustrate a non-claimed embodiment of an electromagnetic solenoid wherein a moving member 21 is elastically suspended by the fixed frame 20 via push springs 22 and 22. Further, an electromagnetic solenoid 35 is provided on the fixed frame 20, and a magnetic member 36 is mounted on the side of the moving member 21 close to the magnetic pole surface of the electromagnetic solenoid 35. In this embodiment, when an electric current is supplied to the electromagnetic solenoid 35 to energize it, the attraction and repelling occurs repetitively relative to the magnetic member 36, imparting vibration to the moving member 21 and, therefore, imparting vibration to the transfer guide 8.

Fig. 16 illustrates a non-claimed embodiment of using piezoelectric elements as vibration-generating means, wherein the fixed frame 20 and the moving member 21 are coupled together by using a pair of coupling members 38 and 39. A piezoelectric element 41 is provided on the side of the fixed frame 20 via a member 40 and a piezoelectric element 43 is provided on the side of the moving member 21 via a member 42.

According to this non-claimed embodiment, vibration occurs if an electric current is supplied to the piezoelectric elements 41 and 43; i.e., vibration is imparted to the moving member 21 via the members 40 and 42 and, as a result, the transfer guide 8 is vibrated.

According to the disclosure constituted as described above, vibration is imparted to the transfer guide 8 from the vibration-generating means, a predetermined amount of the molten resin extruded from the die head 2 is cut into a molten resin mass and is caused to fall down into the female mold for compression forming at a stable timing without adhering to the inner peripheral surfaces of the container chamber 12 of the transfer guide 8.

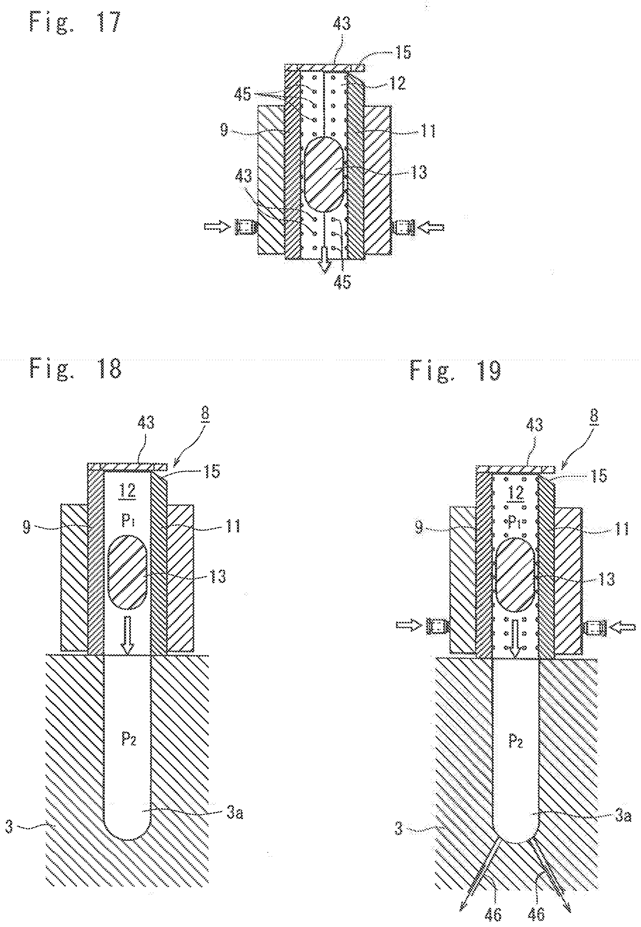

Next, described below with reference to Fig. 17 is a method of feeding a molten resin mass according to the present invention by utilizing the pressure differential.

According to this embodiment, an opening/closing lid 43 is attached to the top surface of the fixed transfer guide 9, and a container chamber 12 which is closed at its upper end and is opened as its lower side is formed in the transfer guide 8 in a manner to control the pressure in the container chamber 12.

Further, a number of fine air holes 45 are perforated in the fixed transfer guide 9 and in the moving holder 11, the air holes 45 being connected to a source of the compressed air that is not shown, and the compressed air is injected into the container chamber 12.

Next, the fundamental embodiment of the method of compression molding according to the invention will be described with reference to Fig. 18.

When the moving holder 11 is closed to the fixed transfer guide 9 that constitutes the transfer guide 8, the invention so works that the pressure is P1 in the container chamber 12 formed between the above two. When the pressure in the female mold 3 for compression molding is set to be P2, the invention so works that the inner pressure P1 becomes greater than the inner pressure P2, i.e., so as to satisfy the condition P1 > P2.

By using the pressure-imparting unit as described above, a pressure differential is produced between the upper side and the lower side of the molten resin mass 13. Therefore, the molten resin mass 13 falling into the container chamber 12 of the transfer guide 8 is allowed to fall down reliably into the female mold 3 for compression molding within short periods of time without dispersion in the timing.

According to the embodiment shown in Fig. 19, further, the pressure in the female mold 3 for molding has been reduced being evacuated through evacuation passages 46, 46 perforated in the bottom portion. According to this embodiment, the relationship P1 > P2 can be reliably and easily set and, besides, the molten resin mass 13 can be fallen down into the female mold 3 without at all adhered on the inner peripheral walls of the fixed transfer guide 9 and the moving holder 11.

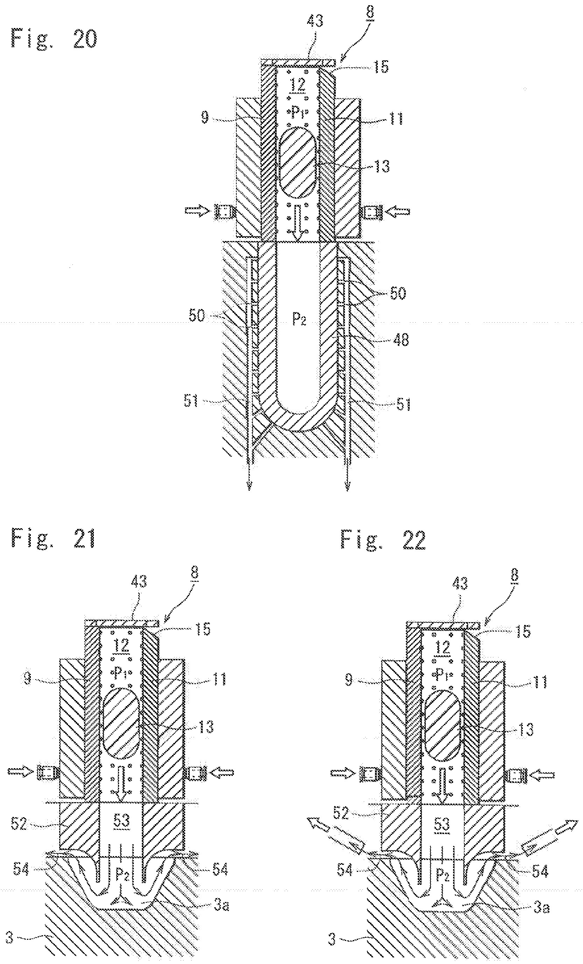

Fig. 20 illustrates an embodiment in which an inner metal mold 50 of a porous material which is a sintered member is incorporated on the inside of the female mold 3 for compression forming, and the outer circumference thereof is communicated with evacuation passages 50 and 51 communicated with a source of evacuation.

Fig. 21 illustrates an embodiment in which the invention is applied to a metal mold for forming a wide-mouth preform, and an intermediate guide member 52 is arranged between the female mold 3 for compression molding and the transfer guide 8. The intermediate guide member 52 has an intermediate passage 53 of a diameter which is the same as that of the container chamber 12 of the transfer guide 8, the passage 53 communicating with the female mold 3 for compression molding and being evacuated through evacuation passages 54 as shown in Fig. 22. According to this embodiment, the pressure P2 in the cavity 3a of the female mold 3 for forming a wide-mouth preform is set to be P1 > P2 relative to the pressure P1 in the container chamber 12 of the transfer guide 8, and the molten resin mass 13 is caused to fall down into the female mold at a stable timing.

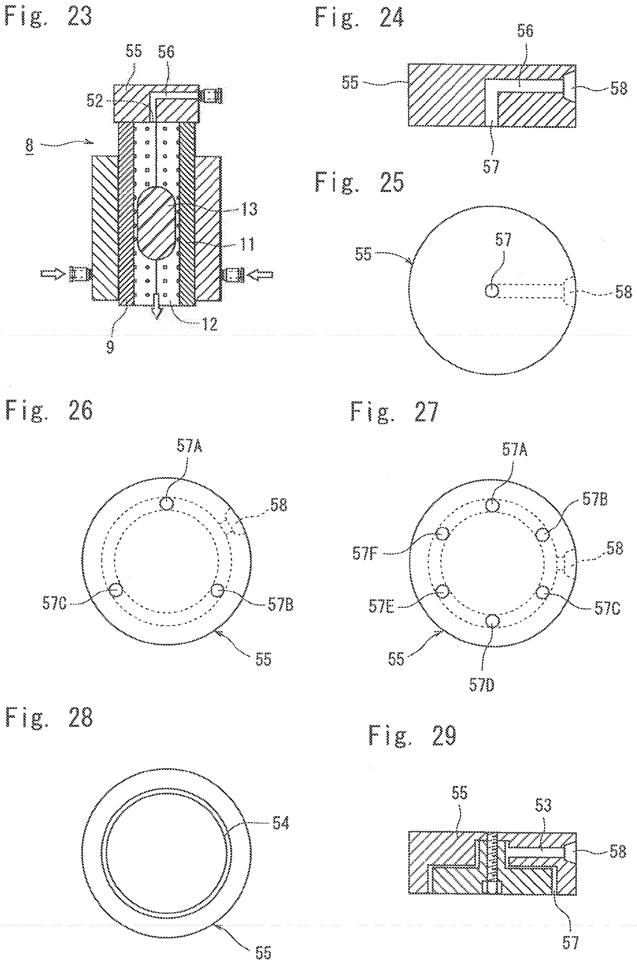

According to the non-claimed embodiment shown in Fig. 23, furthermore, a gas nozzle head 55 is provided on the top surface of the transfer guide 8 and, as will be described later, a high-pressure gas is injected through the injection port from the upper region of the container chamber 12 toward the lower molten resin mass 13. As the high-pressure gas, there can be preferably used an inert gas such as a nitrogen gas or the compressed air. Further, the temperature of the high-pressure gas can be arbitrarily controlled.

In order to blow the high-pressure gas into the container chamber 12 of the transfer guide 8, a nozzle 56 is formed in the gas nozzle head 55 as will be obvious from Fig. 24, the outlet side thereof serving as an injection port 57 that is opened in the upper region of the container chamber 14 while an air feed port 58 is formed on the inlet side.

The air feed port 58 is connected to a source of the compressed air that is not shown.

According to Fig. 25, the injection port 57 is a circular hole that is opened on the center line of the gas nozzle head 55.

The non-claimed embodiment shown in Fig. 26 has three circular injection ports 57A, 57B and 57C perforated maintaining a phase difference of 120 degrees in the circumferential direction.

Further, the gas nozzle head shown in Fig. 27 has six circular injection ports 57A, 58A, ---, 57F perforated maintaining a phase difference of 60 degrees in the circumferential direction.

As shown in Figs. 28 and 29, further, the injection port 57 is formed as an annular groove. In this embodiment, the high-pressure gas can be blown in a circular shape into the container chamber 12 of the transfer guide 8.

According to the above-mentioned non-claimed embodiments a high-pressure gas is injected through the injection port 57 into the container chamber 12 of the transfer guide 8, and acts onto the molten resin mass 13 so as to positively push the molten resin mass 13 down to reliably fall into the female mold.

In all of these non-claimed embodiments, the high-pressure gas is injected straight into the container chamber 12 from the injection port 57 in the gas nozzle head 55. Here, it is also possible to remove irregularity in the high-pressure gas stream in the container chamber 12 by imparting a swirling motion to the high-pressure gas injected into the container chamber 12.

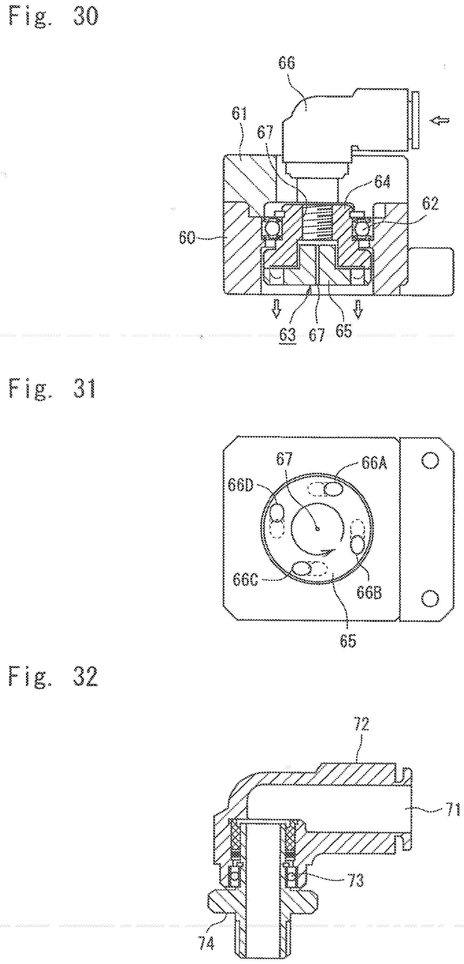

Next, described below with reference to Figs. 30 to 32 is a non-claimed embodiment of imparting a swirling motion to the high-pressure gas.

In Fig. 30, reference numeral 60 denotes a fixed housing which is attached to a gas nozzle head 61 integrally therewith. A rotary head 63 is supported in the fixed housing 60 via a ball bearing 62 so as to rotate. The rotary head 63 is constituted by a retainer member 64 and a nozzle member 65, the retainer member 64 being coupled by thread to a rotary connector 66. That is, an internally threaded hole 67 is formed in the center of the retainer member 64, and is coupled by thread to an externally threaded portion of the rotary connector 66.

Further, the nozzle member 65 is attached to the retainer member 64 by a screw. An air hole 68 may be perforated in the center thereof. As is obvious from Fig. 31, further, four nozzles 66A, 66B, 66C and 66D are perforated maintaining an equal distance in the circumferential direction. The axes of the nozzle holes 66A to 66D are intersecting the center axis of rotation of the rotary head 63 at a predetermined angle. An air passage 67 is formed between the retainer member 64 and the nozzle member 65 to introduce the high-pressure gas to the nozzles 66A to 66D.

As closely illustrated in Fig. 32, further, the rotary connector 66 is constituted by a fixed member 72 having an air feed port 71 connected to the source of the compressed air and a member 74 that rotates relative to the fixed member 72 via a ball bearing 73.

According to the non-claimed disclosure constituted as described above, the high-pressure gas fed into the container chamber 12 of the transfer guide 8 from the nozzles of the gas nozzle head 61 acts onto the upper surface of the molten resin mass 13 so as to reliably fall down into the female mold for forming.

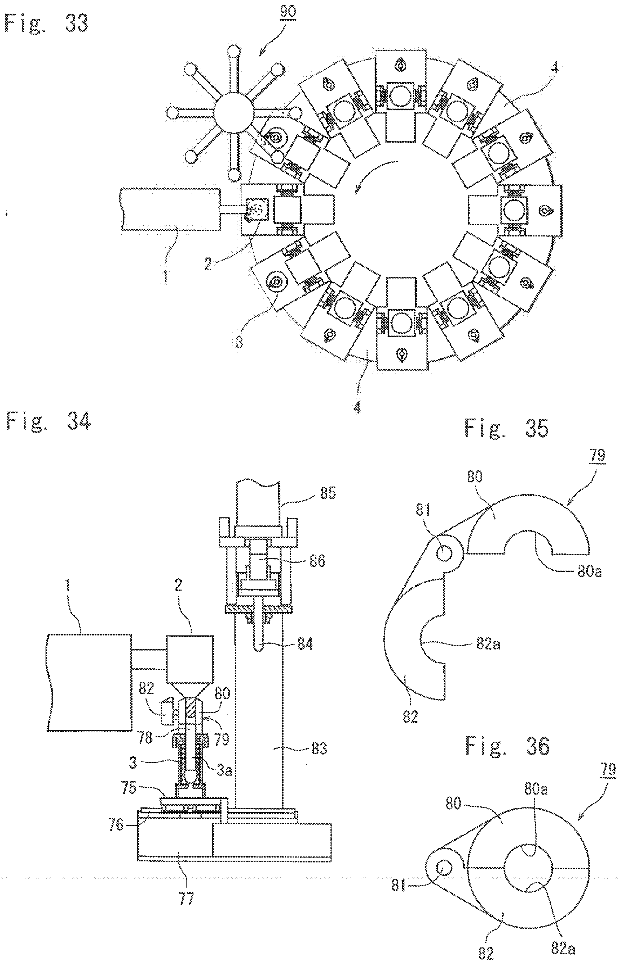

The above non-claimed embodiment has dealt with a case where the disclosure was applied to the cutter device 5 of the rotary type. Not being limited thereto only, however, the disclosure can be further applied to a cutter device of the reciprocal type as shown in Fig. 33.

In Fig. 33, reference numeral 4 denotes a turntable. Twelve female molds 3 for molding are provided on the outer circumferential region of the turntable 4 maintaining an equal pitch in the circumferential direction. Further, an extruder 1 is installed at a station for feeding the molten resin like the one shown in Fig. 1 to extrude a molten resin of a thermoplastic resin such as polypropylene or polyethylene terephthalate downward from the die head 2.

Unlike that of the disclosure shown in Fig. 1, however, the female mold 3 for forming is allowed to reciprocally move between the cutting position just under the die head 2 and the forming position by the male mold along the radial line of the turntable 4. For this purpose, the female mold 3 for formation is placed on a slide plate 75. The slide plate 75 is mounted a guide rail 76 which is fixed on to a bed plate 77 along a radial line. Further, a cylindrical guide throat 78 is installed on the female mold 3 so as to be communicated with the female mold 3 for molding.

A transfer guide 79 is provided on the guide throat 78. As will be obvious from Figs. 35 and 36, the transfer guide 79 is constituted by a fixed blade 80 of a semicircular shape and a moving blade 82 of a semicircular shape pivotally attached thereto via a hinge 81.

The fixed blade 81 and the moving blade 82 have their upper ends that are constituted as portions of cones and having their inner peripheral edges formed as blade tips 80a and 82a.

In Fig. 34, further, a support column 83 is vertically erected on the bed plate 77, and a male mold 84 of the forming metal mold is mounted thereon. The male mold 84 is moved up and down by a hydraulic cylinder device 85 via a piston rod 86. In this non-claimed embodiment too, vibration-generating means is provided for the fixed blade 80 that constitutes the transfer guide.

## Claims

1. A method of feeding a molten resin mass (13) into a female mold (3) for compression molding, wherein the molten resin mass (13) contained in a container chamber (12) in a cylindrical transfer guide (8) is caused to fall down into a cavity (3a) of the female mold (3) at the time of overlapping the cylindrical transfer guide (8) on the female mold (3) of a compression molding apparatus which is transferred on a rotary table (4) in a circumferential direction; **characterised in that** the pressure in the cavity (3a) has been reduced by evacuating through evacuation passages (50, 51) perforated in the bottom portion of the cavity (3a) of the female mold (3) and the pressure (P2) in the cavity (3a) of the female mold (3) of the compression molding apparatus is thus set to be lower than the pressure (P1) in the container chamber (12) of the transfer guide (8) thereby the molten resin mass (13) is caused to fall down into the cavity (3a) by the differential pressure between the container chamber (12) and the cavity (3a).

2. The method of feeding a molten resin mass (13) into a female mold (3) of the compression molding apparatus according to claim 1, wherein the pressure in the container chamber (12) of the transfer guide (8) is elevated.

3. An apparatus for feeding a molten resin mass (13) into a female mold (3) of a compression molding apparatus, wherein the apparatus for feeding the molten resin mass (13) into the female mold (3) of the compression molding apparatus comprises the female mold (3) which is provided in the compression-molding apparatus for the molten resin mass (13) compression molding and is transferred on a rotary table (4) of the compression molding apparatus in the circumferential direction, and the cylindrical transfer guide (8) comprising a container chamber (12) for containing the molten resin mass (13) extruded from a die head (2) of an extruder (1) is capable of overlapping on the female mold (3); and **characterized in that** evacuation passages (50, 51) perforated in the bottom portion of a cavity (3a) of the female mold (3) and a source of evacuation connected to the evacuation passages (50, 51) are provided therewith, and the container chamber (12) is communicated with the cavity (3a) and the pressure in the cavity (3a) is reduced by the source of evacuation, thereby the pressure in the cavity (3a) becomes lower than that in the container chamber (12).

## Patentansprüche

1. Verfahren zum Fördern einer Harzschmelze (13) in eine Negativform (3) zum Formpressen, wobei die in einer Aufnahmekammer (12) in einer zylindrischen Transferführung (8) enthaltene Harzschmelze (13) veranlasst wird, zum Zeitpunkt des Überlappens der zylindrischen Transferführung (8) mit der Negativform (3) einer Formpressvorrichtung, die auf einem Drehtisch (4) in einer Umfangsrichtung transportiert wird, in eine Höhlung (3a) der Negativform (3) herunterzufallen; **dadurch gekennzeichnet, dass** der Druck in der Höhlung (3a) mittels Evakuieren durch in dem unteren Abschnitt der Höhlung (3a) der Negativform (3) gebohrte Evakuierungsdurchgänge (50, 51) reduziert wurde und der Druck (P2) in der Höhlung (3a) der Negativform (3) der Formpressvorrichtung somit dazu eingestellt ist, tiefer zu sein als der Druck (P1) in der Aufnahmekammer (12) der Transferführung (8), wodurch die Harzschmelze (13) durch die Druckdifferenz zwischen der Aufnahmekammer (12) und der Höhlung (3a) veranlasst wird, in die Höhlung (3a) herunterzufallen.

2. Verfahren zum Fördern einer Harzschmelze (13) in eine Negativform (3) der Formpressvorrichtung nach Anspruch 1, wobei der Druck in der Aufnahmekammer (12) der Transferführung (8) erhöht ist.

3. Vorrichtung zum Fördern einer Harzschmelze (13) in eine Negativform (3) einer Formpressvorrichtung, wobei die Vorrichtung zum Fördern der Harzschmelze (13) in die Negativform (3) der Formpressvorrichtung Folgendes umfasst: die Negativform (3), die zum Formpressen der Harzschmelze (13) in der Formpressvorrichtung vorgesehen ist und auf einem Drehtisch (4) der Formpressvorrichtung in der Umfangsrichtung transportiert wird, und die zylindrische Transferführung (8), die eine Aufnahmekammer (12) zum Aufnehmen der aus einem Werkzeugkopf (2) eines Extruders (1) extrudierten Harzschmelze (13) umfasst, in der Lage ist, die Negativform (3) zu überlappen; und **dadurch gekennzeichnet, dass** in dem unteren Abschnitt einer Höhlung (3a) der Negativform (3) gebohrte Evakuierungsdurchgänge (50, 51) und eine mit den Evakuierungsdurchgängen (50, 5 1) verbundene Evakuierungsquelle damit vorgesehen sind, und die Aufnahmekammer (12) mit der Höhlung (3a) in Verbindung steht und der Druck in der Höhlung (3a) durch die Evakuierungsquelle reduziert wird, wodurch der Druck in der Höhlung (3a) niedriger wird als der in der Aufnahmekammer (12).

## Revendications

1. Procédé d'alimentation d'une masse de résine fondue (13) dans un moule femelle (3) pour moulage par compression, la masse de résine fondue (13) contenue dans une chambre formant conteneur (12) dans un guide de transfert cylindrique (8) étant amenée à chuter dans une cavité (3a) du moule femelle (3) au moment du chevauchement du guide de transfert cylindrique (8) sur le moule femelle (3) d'un appareil de moulage par compression qui est transféré sur une table rotative (4) dans une direction circonférentielle ; **caractérisé par le fait que** la pression dans la cavité (3a) a été réduite par évacuation à travers des passages d'évacuation (50, 51) perforés dans la partie de fond de la cavité (3a) du moule femelle (3) et la pression (P2) dans la cavité (3a) du moule femelle (3) de l'appareil de moulage par compression est ainsi réglée pour être inférieure à la pression (P1) dans la chambre formant conteneur (12) du guide de transfert (8), ce qui fait que la masse de résine fondue (13) est amenée à chuter dans la cavité (3a) à cause de la pression différentielle entre la chambre formant conteneur (12) et la cavité (3a).

2. Procédé d'alimentation d'une masse de résine fondue (13) dans un moule femelle (3) de l'appareil de moulage par compression selon la revendication 1, la pression dans la chambre formant conteneur (12) du guide de transfert (8) étant élevée.

3. Appareil d'alimentation d'une masse de résine fondue (13) dans un moule femelle (3) d'un appareil de moulage par compression, l'appareil d'alimentation de la masse de résine fondue (13) dans le moule femelle (3) de l'appareil de moulage par compression comprenant le moule femelle (3) qui est prévu dans l'appareil de moulage par compression pour le moulage par compression de la masse de résine fondue (13) et est transféré sur une table rotative (4) de l'appareil de moulage par compression en direction circonférentielle, et le guide de transfert cylindrique (8) comprenant une chambre formant conteneur (12) pour contenir la masse de résine fondue (13) extrudée d'une tête de filière (2) d'une extrudeuse (1) étant capable de chevaucher le moule femelle (3) ; et **caractérisé par le fait que** des passages d'évacuation (50, 51) perforés dans la portion de fond d'une cavité (3a) du moule femelle (3) et une source d'évacuation connectée aux passages d'évacuation (50, 51) y sont prévus, et que la chambre formant conteneur (12) communique avec la cavité (3a) et la pression dans la cavité (3a) est réduite par la source d'évacuation, ce qui fait que la pression dans la cavité (3a) devient plus faible que celle dans la chambre formant conteneur (12).
